# EUROPEAN PATENT APPLICATION

(11) **EP 1 580 135 A1**
(43) Date of publication of application: **28.09.2005**
(21) Application number: 04010375.6
(22) Date of filing: 30.04.2004
(51) Int. Cl.: B65D 1/02, B29C 49/42

(54) **Manufacturing method for PET bottle capable of keeping state of being contracted in lengthwise direction**

(30) Priority: 22.03.2004 KR 2004019319
(71) Applicant: Gohsho Company, Ltd., Yamanashi (JP)
(72) Inventor: Higuchi, Mitsuo, Nakakoma-gun, Yamanashi (JP)
(74) Representative: Kirschner, Klaus Dieter

(57) **Abstract**

There is provided a manufacturing method for a PET bottle (1) in which the vertical width (height) thereof can be reduced substantially as compared with the time when contents are charged into a PET bottle body. The vertical width (height, volume) of the PET bottle (1) is substantially reduced when it is transported from a manufacturing plant to a plant where the contents are charged, the PET bottle being molded in a state in which the vertical width (height, volume) is substantially smaller than that at the time when the contents are charged in a manufacturing process for manufacturing the PET bottle body (1) in which a part or the whole in the longitudinal direction, excluding the vertical width of a mouth section in the upper end portion, is in a horizontal bellows shape (2).

## Description

### BACKGROUND OF THE INVENTION

### Field of the Invention

The present invention relates to a PET bottle for containing juice or mineral water, which is formed by using a blow molding method which is called stretch blow and injection blow mainly using a preform or generally called PET resin blow, more particularly to a PET bottle whose height is different between when it is filled with contents and when it is empty, and to a manufacturing method therefor.

### Description of the Related Art

The amount of production of synthetic resin bottles has been tremendous in recent years.

However, such bottles have the largest disadvantage that when the juice or mineral water in the PET bottle bodies is drunk off and the PET bottle bodies are discarded, they remain in the shape before they are not emptied, when they are discarded into so-called garbage boxes, the garbage boxes become quickly full as if air were discarded into the garbage boxes, and therefore they are ultimately discarded on the streets to worsen the living environments. In addition, the recovering cost of the emptied PET bottle bodies and the labor cost for cleaning impose a heavy burden on the public works.

This kind of synthetic resin bottles can be manufactured by easy means such as blow molding, but it cannot be said that the strength thereof is sufficient enough to withstand vibrations on automobiles and other transportation means accompanied by vigorous vibrations and in display at stores in which they are stacked on one another.

Further, this makes the ratio of the transportation cost to the product cost considerably high because the PET bottle bodies are so bulky that when the container bottles are transported from the manufacturers of the container bottles to the companies for charging juice or mineral water therein, it seems as if air were transported.

Consequently, the inventor of the present application has already provided a liquid container which is designed so as to be contracted easily when the liquid container is recovered as a waste.

This liquid container is made of a comparatively soft synthetic resin, and the peripheral wall of a liquid PET bottle body with a mouth section at the upper end is formed into a bellows shape (refer to Patent Document 1).

In addition to the above, the inventor has proposed that the PET bottle body is formed into a shape which is substantially contracted in its volume by applying a load in the vertical direction and/or the twisting direction of the PET bottle body, and the invention of the means to keep the contracted shape and the PET bottle body (refer to Patent Document 2).

As a result, both of them can sufficiently attain the above-described object, namely, to reduce the height and the container more when the PET bottle body is crushed and keep the reduced state. The bottle capable of being extended and contracted in the height direction is convenient for transporting it in large quantities at the same time in a state of being contracted from a molding plant to a charging plant for charging contents, and has an advantage that the quantity of emptied bottles contained in a garbage box is increased dramatically, and the absolute quantity of bottles transported to a treatment plant can be increased as much as possible.

The advantage is not limited to the above-described one. When juice or other contents in the PET bottle are drunk in a position of lying, for example, on the shore, it is convenient if the vertical axis of the PET bottle itself can be curved. Also, when the drinking is discontinued during drinking, if only the emptied portion can be contracted, it may be very convenient for carrying the bottle because it can be easily contained in a handbag or the like unlike the conventional PET bottle whose height cannot be changed.

The problem with such a bottle is deemed to be solved by forming the appearance shape into a bellows shape. However, if the PET bottle is made of a so-called PET bottle resin, which is an actually comparatively thin synthetic resin material and moreover an "inexpensive" and comparatively strong material used in recent years, as a result of repeated extending and contracting operations, especially a peak section or a valley section constituting the bellows shape is bent or broken, or a flaw is produced in these sections. In some cases, the contracted state is not kept, and a restoring force for restoring the original shape works. Therefore, it is even said that it is impossible to manufacture a bellows-shaped container using the so-called PET bottle resin.

### [Patent Document]

Japanese Patent Laid-Open No. 2001-213418 (Abstract)
[Patent Document]
Japanese Patent Laid-Open No. 2002-68156 (Abstract)

### SUMMARY OF THE INVENTION

Generally, anobjectof the present invention is to provide a manufacturing method for a PET bottle in which the vertical width (height) thereof can be reduced substantially as compared when the PET bottle body is filled with contents.

Another object of the present invention is to provide a PET bottle which is reduced in its height (volume) significantly when the PET bottle body is transported from the molding plant to the plant for charging mineral water or juice, and is restored to a PET bottle body having the normal volume and height at the charging plant, and a manufacturing method therefor.

Still another object of the present invention is to provide a PET bottle in which the volume (height) of a PET bottle body can be reduced significantly when juice or mineral water in the PET bottle body is drunk off and the PET bottle body is discarded, and a manufacturing method therefor.

Yet another object of the present invention is to provide a manufacturing method for a PET bottle having a shape such that a PET bottle body is carried easily and is not slipped off even when water condenses on the surface thereof, and another object of the present invention is to design the PET bottle body so that the vertical width of emptied portion can be reduced during the time when the contents in the PET bottle body is being drunk.

Another object of the present invention is to significantly increase the number of PET bottles discarded into a garbage box as compared with the conventional case where emptied containers are discarded in a state of having the original vertical width (height) and the garbage box becomes quickly full. Namely, this object is to significantly reduce the quantity of transportation, the recovery cost, and the labor cost for cleaning and recovery by transporting large quantities of emptied PET bottle bodies at the same time.

Still another obj ect of the present invention is to provide a PET bottle in which a mold is suitable for manufacturing PET bottle bodies in large quantities and moreover a bellows section and each fold constituting the bellows can surely be formed, and resultantly when the PET bottle body is crushed, the crushed state can be kept, and a manufacturing method therefor.

Hence, a characteristic of the present invention is that the vertical width (height, volume) of a PET bottle is substantially reduced when it is transported from a manufacturing plant to a plant for charging contents, the PET bottle being molded in a state in which the vertical width (height, volume) is substantially smaller than that at the time when the contents are charged in a manufacturing process for manufacturing a PET bottle body in which a part or the whole in the longitudinal direction, excluding the vertical width of a mouth section in the upper end portion, is in a horizontal bellows shape. Therefore, the transportation quantity of PET bottle bodies can be increased as compared with the conventional transportation quantity.

Also, since the outer periphery of the PET bottle in accordance with the present invention is formed into a bellows shape, the PET bottle is easy to carry, and there is no fear of slipping off even if water condenses.

Another characteristic of the present invention is that when an emptied portion is produced in the PET bottle body by the operation of drinking off the contents, a state of substantially lower volume and height than the vertical width at the time when the contents are charged again can be formed.

As a result, even when the contents are left in the PET bottle, this PET bottle can be carried by being put in a handbag or the like. Also, when the contents are drunk off and the PET bottle body is discarded, the PET bottle body is crushed so that the volume and height are reduced significantly, and then is discarded into a garbage box or the like. Therefore, unlike the conventional case, the garbage box does not become quickly full, and the transportation and recovery work that has conventionally been performed as if air were transported can be improved dramatically.

A characteristic of the PET bottle manufacturing method is that in a manufacturing method for a PET bottle, including the steps of molding a PET bottle body in which a part or the whole in the height direction thereof, excluding the mouth section in the upper end portion, the width in the height direction of the mouth section, and the width in the height direction of a bottom section, is formed into a horizontal bellows shape; and compressing the molded PET bottle body in the longitudinal direction so that when the bellows shape portion of the PET bottle body is compressed toward the center of the PET bottle body from one side or both sides in the lengthwise direction thereof, a state in which the bellows shape portion is crushed in a lapped manner can be kept, the PET bottle body is molded so that the wall thickness of the valley section constituting the bellows shape is larger than the wall thickness of the peak section.

When such a PET bottle body is transported from the molding plant to the charging plant, or when the contents are drunk off and the PET bottle body is crushed, the PET bottle body is pressed in the height direction. Thereby, the peak section with a small wall thickness is first pushed, and is moved in the direction such that the upper and lower faces of fold lap on each other.

When the force in the height direction is further applied continuously, this force moves gradually toward the valley section and is relaxed. Even if the whole of the PET bottle body is extended and contracted in the height direction repeatedly, an accident such that a part of fold periphery is broken or damaged and hence the contents leak out can be prevented by the presence of this thick valley section.

In this case, substantially, the wall thickness of the valley section constituting the bellows portion is preferably 0.4 to 0.5 mm, and the wall thickness of the peak section is preferably 0.2 to 0.35 mm. If the wall thicknesses are outside these ranges, the extending and contracting action of the PET bottle body is insufficient, and the contracted state is not kept, so that there is a fear that a restoring force works and the original state is formed. Above all, there is a fear that the peak section or the valley section is damaged by repeated extending and contracting action.

Another characteristic of the present invention is that the PET bottle body crushed in such a manner that the bellows shape portion laps, which PET bottle body is obtained by the manufacturing method for a PET bottle capable of keeping the state of being contracted in the lengthwise direction in accordance with the present invention, is transported to the charging plant, where contents are charged into the PET bottle body, in the crushed state, and in the charging plant, the PET bottle body is extended by blowing air before the contents are charged, or the PET bottle body is restored to the original shape before crushing by a pressure for charging the contents. Still another characteristic of the present invention is that the step of compressing the PET bottle body is carried out while air in the PET bottle body is sucked.

If necessary, in carrying out the present invention, a mechanical mechanism for compressing the PET bottle body in the vertical direction may be used as means for compressing the PET bottle body.

In addition, another characteristic of the present invention is that in the step of molding the PET bottle body, a preform is automatically supplied into a mold, and the bellows-shaped PET bottle body is molded by high-pressure air of about 40 kilogram. By doing this, there can be obtained a PET bottle which is not cracked, broken, or bent even when the PET bottle body is transported from the molding plant to the charging plant for charging the contents, when work for extending the PET bottle body again in the charging plant to increase the volume thereof is performed, when an operation in which the contents are drunk off and the volume of the PET bottle body is accordingly reduced is performed, or when an operation in which the PET bottle body is crushed completely and is discarded is performed.

The present invention is naturally applied to a PET bottle body having the mouth section in the upper end portion, the width in the height direction of the bottom section, and a flat section provided in a middle portion, in which the whole or a part in the lengthwise direction thereof, excluding the mouth section, the width in the height direction of the bottom section, and the flat section, is formed into a horizontal bellows shape. The entire shape of the PET bottle body is appropriately selected from circular cylinders including an elliptical cylinder, square columns including a rectangular column, circular cones and pyramids including truncated ones, an hourglass dream shape, and a barrel shape. The horizontal cross-sectional shape of the PET bottle body is appropriately selected from round shapes including an ellipse, and square shapes including a rectangular shape. The present invention can be applied to the manufacturing means for such a container as the above-described PET bottle body around the outer periphery of which a label with a content guide and trade name of the container can be wound. All of these are considered within the technical scope of the present invention.

The present invention has other excellent objects, characteristics, and operational effects, and these will become apparent in the following explanation of the embodiment.

Generally, the effect of the present invention is that the PET bottle can be manufactured in large quantities easily, the PET bottle being configured so that the volume thereof can be reduced significantly when juice or mineral water in the PET bottle body is drunk off and the PET bottle body is discarded, the PET bottle body being such that the whole or a part in the lengthwise direction thereof , excluding the mouth section in the upper end portion, the width in the height direction of the bottom section, and the width in the height direction of the mouth section, is formed into a horizontal bellows shape.

### BRIEF DESCRIPTION OF THE DRAWINGS

FIG. 1 is a front view showing the whole of a PET bottle body manufactured by a method in accordance with an embodiment of the present invention;
FIG. 2 is an explanatory front view showing the whole of a crushed PET bottle body;
FIG. 3 is an enlarged sectional view of a part of a crushed PET bottle body;
FIG. 4 is an enlarged sectional view for illustrating folds constituting a PET bottle body;
FIG. 5 is an explanatory view of a PET bottle body that is being crushed;
FIG. 6 is a partially broken sectional view for illustrating a PET bottle body that has been crushed;
FIG. 7 is an enlarged sectional view showing a state of deformed shoulder section at the time when a PET bottle body is crushed, showing an initial stage of pressing operation;
FIG. 8 is an enlarged sectional view showing a state of deformed shoulder section at the time when a PET bottle body is crushed, showing an intermediate stage of pressing operation;
FIG. 9 is an enlarged sectional view showing a state of deformed shoulder section at the time when a PET bottle body is crushed, showing a stage at which pressing operation is finished;
FIG. 10 is an enlarged sectional view showing a state of deformed central body section at the time when a PET bottle body is crushed, showing an initial stage of pressing operation; and
FIG. 11 is an enlarged sectional view showing a state of deformed central portion at the time when a PET bottle body is crushed, showing an intermediate stage of pressing operation.

### [Description of Symbols]

- A: body section including central portion and lower portion
- C: shoulder section
trumpet-shaped connecting section
annular groove
- G: both hands
- H: both hands
- P: valley section
- Q: peak section
- R: wall thickness of peak section (Q)
- S: wall thickness of valley section (P)
- T: thickness of substantially intermediate section between valley section (P) and peak section (Q)
- U: preform
- V: thickness of preform (U)
- d: outside diameter of fourth step of bellows shape (outside diameter of PET bottle body (1))
- d1: outside diameter of highest step (outside diameter of first step of bellows shape)
- d2: outside diameter of second step of bellows shape
- d3: outside diameter of third step of bellows shape
- h1: upper part of first step of fold
- h2: lower part of first step of fold
- PET: bottle body
bellows shape
mouth section
partial spherical shape
- 2A: first step of bellows shape
- 2B: second step of bellows shape
- 2C: third step of bellows shape
- 2D: fourth step of bellows shape
cap
- m: upper face of shape of bead of Japanese abacus
- n: lower face of shape of bead of Japanese abacus

### DETAILED DESCRIPTION OF THE PREFERRED EMBODIMENTS

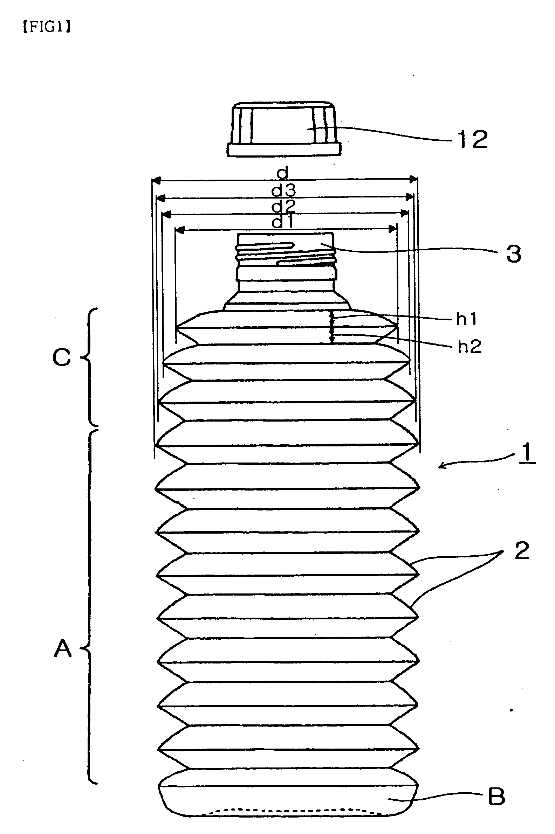

In FIG. 1, reference numeral (1) denotes a PET bottle body, and the outer and inner peripheries thereof in the height (lengthwise) direction excluding a mouth section at the upper end portion are formed into a bellows shape (2).

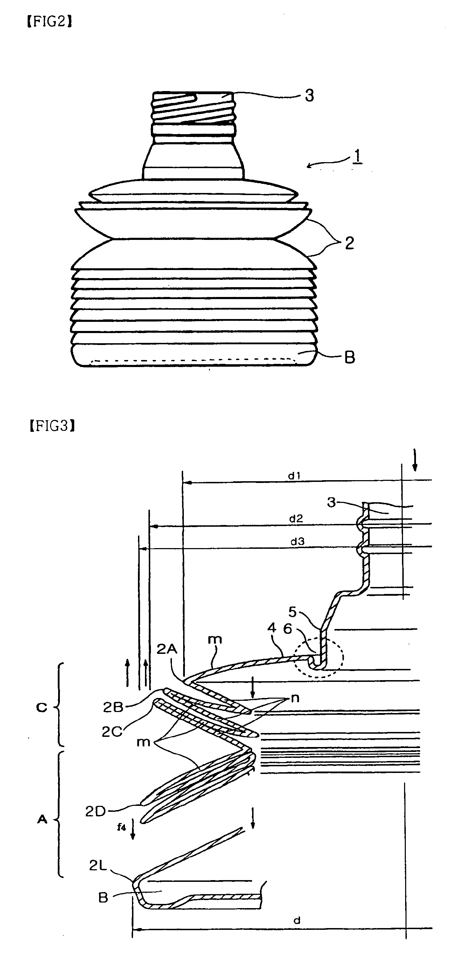

FIG. 2 shows the PET bottle body (1) in a state of being crushed from one side or both sides in the height (lengthwise) direction when, for example, mineral water is not yet charged in the PET bottle body (1) or after the mineral water is drunk off.

The present invention has an excellent configuration for crushing the PET bottle body (1) and keeping the crushed state, and achieves an excellent operation.

As one example of the configuration of the PET bottle body (1) , as seen from FIG. 3, reference numeral (3) denotes a mouth section of the PET bottle body (1) , having a diameter of about 28 mm and a height of about 23 mm, which is formed with external threads on the outer periphery thereof, and just under the mouth section (3), a trumpet-shaped connecting section (5) is coaxially connected with the mouth section (3) , the trumpet-shaped connecting section (5) having a height of 5 to 10 mm and being configured so that the diameter thereof is increased downward to about 51 mm.

A shoulder section (C) of the PET bottle body (1) is formed with a U-shaped annular groove (6) whose inside end is horizontal, and the terminal end of the trumpet-shaped connecting section (5) and the inside of the annular groove (6) are connected to each other.

A side outside the U-shaped annular groove (6) is formed into a partial spherical shape (4), and the outside diameter (d1) of a first step of bellows shape (2A), that is, the outside diameter (d1) of the highest step of the bellows shape (2) is smaller than the outside diameter (d) of the PET bottle body (1).

Successively, the outside diameter (d2) of a second step of bellows shape (2B) is larger than the outside diameter (d1) of the first step of bellows shape (2A) and is smaller than the outside diameter (d) of the PET bottle body (1).

The shoulder section (C) is of a stairway shape, as viewed from the side, so that a third step of bellows shape (2C) of the PET bottle body (1) , which connects with the second step of bellows shape (2B), has an outside diameter (d3) larger than the outside diameter (d2) of the second step of bellows shape (2B) . Needless to say, the number of steps is not limited to three, and an appropriate number of steps can be formed. In this embodiment, the number of steps is three.

Concretely, the container shown in FIG. 1 is the PETbottle body (1) having a height of 195 mm, a maximum diameter of 71.5 mm, and a volume of 500 ml, and is formed into a shape having 12 steps of folds 2A to 2L.

In this case, the outside diameter (d1) of the first step of bellows shape (2A) is set at 60. 5 mm, and the outside diameter (d2) of the second step of bellows shape (2B) is set at 67.9 mm.

Similarly, the outside diameter (d3) of the third step of bellows shape (2C) is set at 69.7 mm.

The outside diameters of a fifth to twelfth steps of bellows shapes (2E to 2L) are equal to the diameter (d) of a fourth step of bellows shape (2D), and the inside diameters thereof are equal to the inside diameter between the third step of bellows shape (2C) and the fourth step of bellows shape (2D).

In this case, each fold (2A to 2L) is in such a shape as an unidentified flying object (UFO) called the Adamski type, and therefore it is horizontally divided into two of upper and lower parts.

At this time, in FIG. 1 the heights of the upper part (h1) and the lower part (h2) of the first step of fold (2A) are set at 6.5 mm and 5.5 mm, respectively, those of the second step of fold (2B) are set at 7 mm and 5 mm, respectively, and those of the third step of fold (2C) are set at 8.5 mm and 6.5 mm, respectively.

More concretely, in the present invention, an especially important point of configuration is the wall thicknesses of these folds in a cross-sectional shape, which is shown in FIG. 4.

Specifically, a valley section (P) constituting the bellows shape (2) is molded thick so that the wall thickness of the valley section (P) is larger than that of a peak section (Q). As a concrete example, the wall thickness (S) of the valley section (P) is set at 0.49 mm, the wall thickness (R) of the peak section (Q) is set at 0.27 mm, and the thickness (T) of a substantially intermediate section between the valley section (P) and the peak section (Q) is set at 0.39 mm.

In FIG. 4, reference character (U) denotes a preform that is inserted in a mold, not shown, before the PET bottle body (1) in accordance with the present invention is molded. Although both of the preform (U) and the PET bottle body (1) cannot be shown in the same figure, FIG. 4 shows both of them only for convenience. The preform (U) having a thickness (V) of 2.03 mm was used.

In molding the PET bottle, the outside of the preform (U) generally has a higher temperature than the inside thereof. This is because the outside of the preform (U) is excessively heated by a heater provided on the outside of the preform (U) in a process for reheating the preform (U).

Successively, the preform (U) having expanded at the time of blow molding first comes into contact with a point of mold at which the valley section (P) is molded, so that the wall thickness of the valley section (P) becomes large. Contrarily, the peak section (Q), which is comparatively far, is molded so as to have a small wall thickness.

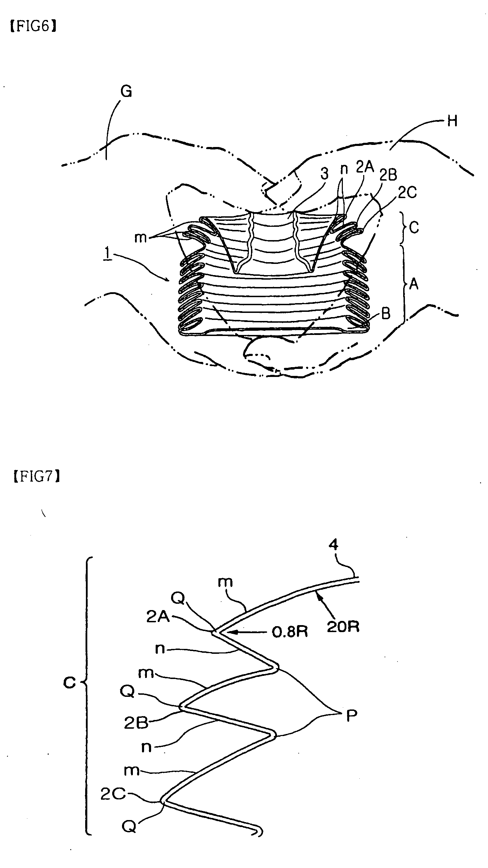

Further, as seen in FIG. 7, in an example of dimensions of the first to third steps of folds (2A to 2C) , the wide upper face (m) of a shape of bead of Japanese abacus is in a curved shape of 20 mm R in this embodiment in which the upper face protrudes to the outside, and contrarily the lower face (n) thereof is in a straight line shape via the peak section (Q) of 0.8 mm R. This is also an important point of configuration.

The configuration of this embodiment is explained in combination with the operation thereof. The PET bottle body (1) in a state shown in FIGS. 2 and 3 is divided into two parts: a body section (A) including a central portion and a lower portion and a shoulder section (C) above the body section (A) . Each of the sections (A) and (C) keeps a stable vertical state because the diameter thereof consists of two diameters, large and small.

Specifically, the body section (A) including the central portion and the lower portion is formed by folds having the same inside and outside diameters, while the shoulder section (C) is curved convexly with a gentle slope in appearance in the direction toward the mouth section (3). In particular, in the shoulder section (C) , the inside diameters of the valley sections (P) forming the folds are decreased gradually in the range from the central portion to the mouth section (3), and the difference in inclination angle is larger than that of the body section (A). Therefore, in the state in which the central portion is extended, the inside diameter and inclining face of the peak section (Q) and the valley section (P) forming the fold can keep the extended state by the strength and elasticity of the material.

A bottom section (B) of a concave shape with a steep slope naturally provides good stability.

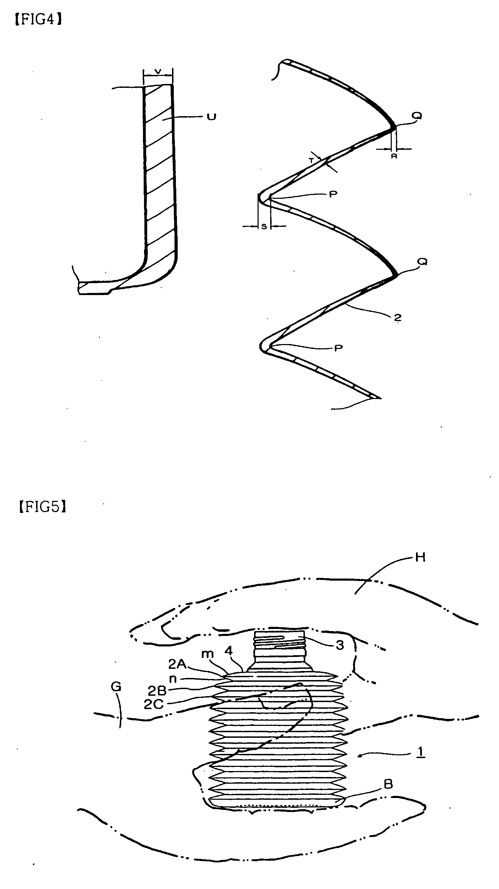

When the molding of the PET bottle body (1) has been finished and the PET bottle body (1) is transported to a charging plant, or when the contents are drunk off, the PET bottle body (1) is pressed by both hands (G) and (H) in the intermediate direction of the bottle by being placed vertically between the palms of both hands (G) and (H) as shown in FIG. 5, by which the body section (A) of the PET bottle body (1) becomes in a crushed state as shown in FIG. 2.

Although it is well that a strong force necessary for performing the above-described pressing operation can be applied, in many cases such as a case where the bottle is damaged, the forefingers through the little fingers of both hands are put on the bottom section (B) of the PET bottle body (1) and the thumbs of both hands (G) and (H) are put on top of the mouth section (3), by which the PET bottle body (1) is pressed in the direction toward the bottle center by these fingers. Thereby, the mouth section (3) is embedded in the PET bottle body (1) as shown in FIG. 6.

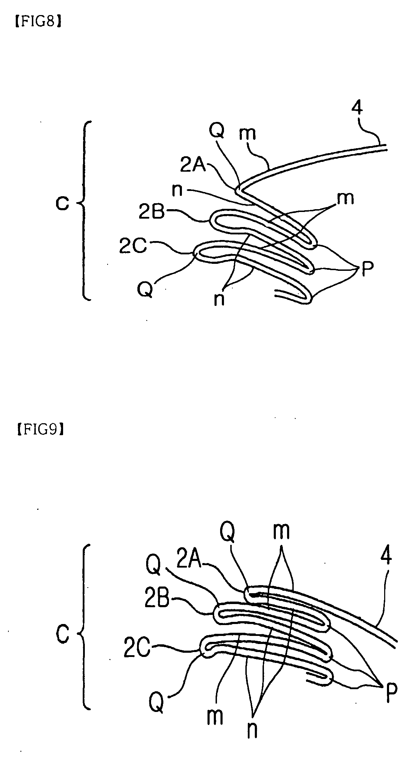

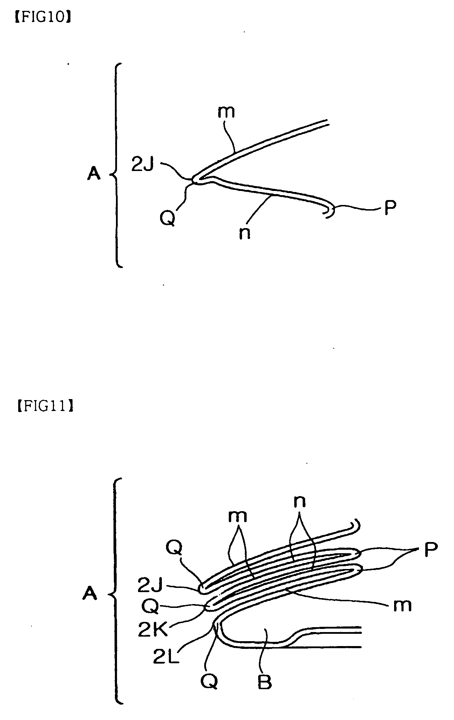

The body section (A) including the upper portion and lower portion of the PET bottle body (1) in this state is in a state in which the shoulder section (C) and the body section (A) are compressed and contracted as shown in FIGS. 7 to 11.

Specifically, from the state shown in FIG. 7, the folds of the shoulder section (C) are pressed, and the end face of the valley section (P) compresses the valley end face of the fold located adjacently thereto in the vertical relation.

In the state seen from the vertex of the peak section (Q) of fold at this point of time, it seems that the valley sections (P) on both sides are pressed near to the vertex of the peak section (Q) . In this case, since the upper face (m) of the fold has a smaller inclination with respect to the lower face (n) , the compression component force on the gentle slope side of the upper face (m) of fold is larger than the compression component force on the steep slope side of the lower face (n), so that the valley section (P) on the steep slope side moves toward the vertex of the peak section (Q).

At this time, the PET bottle body (1) undergoes two great changes.

Firstly, the inside diameter of the peak section (Q) constituting the fold is increased by an extension pressure, or the inside diameter of the valley section (P) is decreased by a compression pressure. Secondly, the steep slope face of the lower face (n) constituting the fold is bent.

Subsequently, when the steep slope side passes directly under the peak section (Q), further getting into the inside of the gentle slope side of the upper face (m) as shown in the figure, and the height of the PET bottle body (1) is moved into a shortened state, a force to restore the inside diameter of the peak section (Q) and the inside diameter of the valley section (P) works, or the lower face (n) which has been brought into the bent state by the above-described operation is restored into the extended state to be in a stable state.

Accordingly, even if the compressing force is not always applied, the shortened state can be kept.

The valley section (P) with a small inside diameter receives the compression pressure, so that the inside diameter thereof becomes further smaller, and pressure stress occurs.

When the compression pressure does not exist, the stress works soas tobe released, and the valley section (P) is restored into the extended state.

When a cap (12) is tightened in this pressure state so that the atmospheric pressure works, the PET bottle body (1) keeps the shortened state. When the compression stress does not occur due to the difference in the inside diameter of the valley section (P), the shortened state is kept.

As a result, in repeated experiments, the PET bottle body (1) is reduced to 1/3 to 1/4 or less in its height (volume), and has a construction such as to withstand frequent extending and contracting action or curvedly bending action, the extending and contracting action being such that, when the PET bottle body (1) is transported from the molding plant to the charging plant, the volume thereof is reduced; in the charging plant, the contents can be charged to the original volume; during drinking, the PET bottle body (1) can be curved or contracted according to the drunk amount; or when PET bottle body (1) is discarded, it can be contracted so that the volume thereof becomes nearly "0".

When a force is applied to the upper face (m) of fold constituting the PET bottle body (1) in accordance with the present invention, the force first moves in the direction such that the peak section (Q) with a small wall thickness is bent and the upper face (m) and the lower face (n) lap on each other, and then the force gradually moves toward the valley section (P) with a large wall thickness and is relaxed. By the existence of this force, the extending and contracting action of the PET bottle body (1) is performed smoothly, and the PET bottle can fully withstand a shock due to repeated extension and contraction and bending.

In this embodiment of the present invention, even after this state is formed, the mouth section (3) is further pressed toward the bottom section (B) of the PET bottle body (1).

At this time, since the folds are folded in a contact manner in the body section (A) and the shoulder section (C) of the PET bottle body (1) , even if the mouth section (3) is further pushed down, it does not lower.

When the mouth section (3) is further pressed downward, first, the terminal end side of the trumpet-shaped connecting section (5) presses down the inside of the U-shaped groove (6) .

Consequently, since the groove (6) is in a state in which the outside upper end side thereof and the shoulder section (C) are connected and attached to each other, in the state in which the U shape is collapsed and the inside is pushed downward, the groove (6) is expanded while the terminal end portion of the trumpet-shaped connecting section (5) is pressed downward. Ultimately, as shown in FIG. 6, the groove (6) is pushed into the PET bottle body (1) together with the mouth section (3).

In the above-described embodiment, the connecting section (5) between the mouth section (3) and the PET bottle body (1) is made in a trumpet shape, and is configured so that when the PET bottle body (1) is crushed, it is reversed and is put into the PET bottle body (1).

However, even if the mouth section (3) is not pushed into the crushed PET bottle body (1) forcibly, the height (namely, the volume) thereof can be reduced sufficiently.

This is explained with reference to the figure. The fold of the PET bottle body (1) is in a wide UFO shape of the Adamski type, and therefore is divided horizontally into two of upper and lower parts as described above.

Specifically, in the figure, (m) is the upper face including the inside face of the wide UFO shape of the Adamski type, and (n) is the lower face including the inside face of the wide UFO shape of the Adamski type. In this embodiment in which the upper face (m) protrudes to the outside, the upper face (m) is in a curved shape of 20 mm R, and contrarily the lower face (n) is in a straight line shape via the peak section (Q) of 0.8 mm R. This is an important point of configuration.

The valley section (P) with a small inside diameter receives the compression pressure, and pressure stress occurs.

When the compression pressure does not exist, the stress works so as to be released, and when the contents such as juice is charged, the valley section (P) is restored into the extended state.

When the cap (12), not shown, is tightened in this pressure state so that the atmospheric pressure works, the PET bottle body (1) keeps the shortened state. When the compression stress does not occur due to the difference in the inside diameter of the valley section (P), the shortened state is kept.

In this embodiment, as described above, the diameter of fold in the shoulder section (C) of the PET bottle body (1) increases toward the downside. As a result, the crushed fold is lapped on the inclination so that the outer peripheral side is above the inner peripheral side.

Subsequently, when the upper face portion of the mouth section (3) and/or the partial spherical shape (4) of shoulder section (C) is pressed, the pushing-down force works at the outer peripheral side of each fold as well. Consequently, the folds in the body section (A) including the central portion and the lower portion are lapped on each other slantwise in the direction reverse to that in the shoulder section (C) in which the outer peripheral side is below the inner peripheral side.

In this crushed PET bottle body (1) , the partial spherical shape (4) forming an upper inclined portion of fold in the shoulder section (C) is "balanced" with a lower inclined portion of fold in the body section (A), so that even if the cap (12) is not put again, the PET bottle body (1) can keep its crushed state.

As a result, in repeated experiments, the PET bottle body (1) is reduced to 1/5 to 1/8 or less in its height (volume), and therefore, even if it is discarded into a garbage box or the like, the space occupied by it can be reduced significantly.

As described above, in the embodiment of the present invention, by pressing the mouth section (3) , the mouth section (3) is embedded in the PET bottle body (1) , and simultaneously a portion around the bottom section (B) of the PET bottle body (1) is also embedded in the PET bottle body (1) by the action equivalent to the action of reversing the shoulder section (C) of the PET bottle body (1) . As a result, the volume (height) of the PET bottle body (1) can be reduced to about 1/10 as compared with the case where the emptied PET bottle body (1) is discarded without being crushed.

Since the commercially available drink container usually has a volume of 500 ml, this volume is scarcely drunk off at one time.

Therefore, even if the contents are left in the container, the container with an emptied portion and the original volume must be carried.

In this respect, the container in accordance with the present invention can be carried with the emptied portion being contracted, so that the unfinished container can be put in a handbag.

In the case of children or women having a comparatively weak force, the PET bottle body (1) can be crushed very easily by trampling down by a foot, not relying on hands only.

For many PET bottles used as the drink containers, a flat label section in which the trade name, the explanation of contents, the manufacturer, and the like are written is provided in a middle portion of the PET bottle body (1). Such a container also achieves the same operation and effects as described above.

The main effect of the above-described PET bottle body (1) is that when the PET bottle body (1) is discarded, the volume thereof can be reduced significantly, and the number of bottle bodies put in a garbage box or the like can be increased significantly.

Also, since the contracted PET bottle body can be transported in large quantities at the same time, the recovery cost and the labor cost for cleaning and recovery can be reduced significantly.

Further, the PET bottle body in accordance with the present invention has a good outward appearance and gives high interest to the user. Also, the bellows shape of the PET bottle body serves as a frictional stopper, so that a trouble such that the PET bottle body slips down during the use or that the contents are caused to overflow can be prevented.

The PET bottle body in accordance with the present invention has a shape that looks nice in design even in the crushed state, so that it can be used as another container as it is crushed.

## Claims

1. A manufacturing method for a PET bottle capable of keeping a state of being contracted in the lengthwise direction, comprising the steps of: molding a PET bottle body in which a part or the whole in the height direction thereof, excluding a mouth section in the upper end portion, the width in the height direction of said mouth section, and the width in the height direction of a bottom section, is formed into a horizontal bellows shape; and compressing the molded PET bottle body in the longitudinal direction so that when the bellows shape portion of said PET bottle body is compressed toward the center of said PET bottle body from one side or both sides in the lengthwise direction thereof, a state in which said bellows shape portion is crushed in a lapped manner can be kept, wherein
said PET bottle body is molded so that the wall thickness of a valley section constituting said bellows shape is larger than the wall thickness of a peak section.

2. The manufacturing method for a PET bottle capable of keeping a state of being contracted in the lengthwise direction according to claim 1, wherein the wall thickness of said valley section is actually 0.4 to 0.5 mm, and the wall thickness of said peak section is 0.2 to 0.35 mm.

3. The manufacturing method for a PET bottle capable of keeping a state of being contracted in the lengthwise direction according to claim 1 or 2, wherein said method further comprises a step such that the PET bottle body crushed in such a manner that said bellows shape portion laps is transported to a charging plant, where contents are charged into said PET bottle body, in the crushed state, and in said charging plant, said PET bottle body is extended by blowing air before said contents are charged, or said PET bottle body is restored to an original shape before crushing by a pressure for charging said contents.

4. The manufacturing method for a PET bottle capable of keeping a state of being contracted in the lengthwise direction according to any one of claims 1 to 3, wherein the step of compressing said PET bottle body is carried out while air in said PET bottle body is sucked.

5. The manufacturing method for a PET bottle capable of keeping a state of being contracted in the lengthwise direction according to any one of claims 1 to 4, wherein in forming the bellows shape of said PET bottle body, the upper face of said bellows shape is in a curved shape protruding outward, and the lower face thereof is in a straight line shape.

6. The manufacturing method for a PET bottle capable of keeping a state of being contracted in the lengthwise direction according to any one of claims 1 to 5, wherein in the step of molding said PET bottle body, a preform is automatically inserted in a mold, and the bellows-shaped PET bottle body is molded by high-pressure air of about 40 kilogram.

7. The manufacturing method for a PET bottle capable of keeping a state of being contracted in the lengthwise direction according to claim 6, wherein the thickness of the periphery of said preform is 1.5 to 2.5 mm.
